# EUROPEAN PATENT SPECIFICATION

(11) **EP 1 625 694 B1**
(45) Date of publication and mention of the grant of the patent: **25.10.2006**
(21) Application number: 04730591.7
(22) Date of filing: 30.04.2004
(51) Int. Cl.: H04L 12/18

(54) **METHOD OF OPERATING A MBMS (MULTIMEDIA BROADCAST MULTICAST SERVICE) FOR A MOBILE STATION ACCORDING TO THE POSITION OR SIGNAL QUALITY**
VERFAHREN ZUM BETREIBEN EINES MBMS (MULTIMEDIA BROADCAST MULTICAST SERVICE) FÜR EINE MOBILSTATION NACH ORT ODER QUALITÄT DES SIGNALS
PROCEDE D'UTILISATION D'UN MBMS (SERVICE DE DIFFUSION MULTIMEDIA MULTIDESTINATION) DESTINE A UNE STATION MOBILE EN FONCTION DE LA POSITION OU DE LA QUALITE DU SIGNAL

(30) Priority: 16.05.2003 GB 0311277; 18.11.2003 GB 0326802
(43) Date of publication of application: 15.02.2006
(73) Proprietor: SIEMENS AKTIENGESELLSCHAFT, 80333 München (DE)
(72) Inventor: PROCTOR, Toby, Kier, Southampton SO14 3TP (GB); MEMAR, Mohammad, Ali, A-1190 Wien (AT); ULRICH, Thomas, 67098 Bad Durkheim (DE); VESELY, Alexander, A-1170 Wien (AT)
(86) International application number: PCT/GB2004/001876
(87) International publication number: WO 2004/102878

(56) References cited:
- EP-A- 1 309 213
- WO-A-01/26397
- NORTEL NETWORKS/ SAMSUNG: "MBMS Scenarios - UE Link Handling" 3GPP TSG-RAN2-RAN3 35 MEETING, [Online] no. r2-030732/r3-030483, 3 April 2003 (2003-04-03), pages 1-7, XP002292826 INTERNET - SEOUL, KOREA, 7TH-11TH APRIL, 2003 Retrieved from the Internet: URL:http://www.3gpp.org/ftp/tsg_ran/WG2_RL 2/TSGR2_35/Docs/> [retrieved on 2004-08-17]
- JARI ISOKANGAS; SINIKKA SARKKINEN - NOKIA: "Multicast in UMTS - Advanced topics in broadband networks"[Online] 2 December 2002 (2002-12-02), pages 1-17, XP002292827 Retrieved from the Internet: URL:www.cs.tut.fi/kurssit/83390/materials/ Multicast-in-UMTS.pdf> [retrieved on 2004-08-17]
- SIEMENS: "Control of p-t-m Radio Configurations for MBMS" 3GPP RAN 2 AND RAN 3 JOINT MBMS MEETING, [Online] no. r2-030075, 13 January 2003 (2003-01-13), pages 1-4, XP002292828 INTERNET - WOKINGHAM, BERKSHIRE, UK, 15TH-16TH JANUARY 2003 Retrieved from the Internet: URL:www.3gpp.org - /ftp/tsg_ran/WG2_RL2/TSGR2_AHs/2003_01_MBM S/Docs/> [retrieved on 2004-08-17]
- PHILIPS: "on the issue of switching between p2p- and p2m- channels in MBMS" JOINT 3GPP TSG RAN WG2 AND WG3 ON MBMS, [Online] no. r2-030078, 13 January 2003 (2003-01-13), pages 1-3, XP002292829 INTERNET - LONDON, UK, 15TH-16TH JANUARY 2003 Retrieved from the Internet: URL:www.3gpp.org/ftp/tsg_ran/ WG2_RL2/TSGR2_AHs/2003_01_MBMS/Docs/> [retrieved on 2004-08-17]

## Description

This invention relates to operation of a wireless service, in particular a service which can be broadcast to its users. The particular examples described below relate to second generation (2G) mobile phone systems, but the principle of this invention is equally applicable to any system in which data can be broadcast to users over a wireless network, whether using 2G, 3^{rd} generation (3G) or any other existing or future network system.

For some existing mobile services, it may be beneficial to count the number of users interested in receiving a pending multimedia broadcast/multicast service (MBMS), and also to count clustering of these users around the base transceiver station (BTS). In MBMS it has been proposed that counting of users interested in a service is done, in order to determine the most efficient way to deliver the data to the users. The delivery may be either by a point to multipoint (ptm) bearer, or on a normal point to point (ptp) bearer as used in general packet radio service (GPRS) today.

This simplistic approach does not provide an efficient way to measure the distance of a mobile station (MS) from the BTS, and hence gives no indication of the power level required to provide an acceptable delivery or the acceptable level of protective data encoding. There are methods by which individual mobile stations communicating with a base station can modify the power level of the base station transmission, so that the minimum necessary power is used. These involve the base station reducing its transmission power in successive iterations until the mobile station no longer receives an acceptable signal, then increasing the power just enough to communicate again. This method would be entirely inappropriate for a potential broadcast scenario, as all the resources would be taken up in determining the power level and none in actually communicating.

EP1309213 describes a method in which a multicast service can be received outside a broadcast area, via a point to point (ptp) channel, if a subscriber elects to receive the service both inside and outside the broadcast area, although expected to be at a higher cost. This system improves availability to the subscriber, but does not address the issue of system efficiency because the MBMS broadcast within the broadcast area is made irrespective of the number of subscribers in that area - it simply allows any subscriber outside the area who has elected to still receive the multicast data to also get a ptp link for their data.

WO01/26397 describes determining a minimum transmission quality for a multicast broadcast, sending a test transmission to a group and receiving a response from one mobile terminal representing the group, then broadcasting to the group if the test transmission exceeded the minimum quality.

3GPP TSG-RAN2/RAN3 #35 Meeting Seoul, Korea 7^{th} to 11^{th} April, 2003 describes a mechanism for determining whether an interested UE is in a multicast area or not and whether data distribution should be by point to point or point to multipoint according to the number of interested UE's in each cell.

In accordance with the present invention, a method of operating a multi-media broadcast/multicast service MBMS comprises causing a network controller to broadcast to all mobile stations in a cell an offer of service; requesting from each mobile station an indication of interest in the offered service; receiving data relating to each interested mobile station enabling the position or received signal quality of each mobile station within the cell to be determined; calculating a preferred distribution of point to multipoint and point to point bearers for interested mobile stations in one or more predefined areas within the cell; wherein the range of a subsequent broadcast is determined by one of received power level or received quality at the mobile station of a notification message sent from a base transceiver station to the mobile station; wherein the broadcast uses point to multipoint bearers; and requiring each interested mobile station which is out of range of the subsequent broadcast transmission to use point to point bearers to receive the service.

Preferably, the method further comprises broadcasting at reduced power to the mobiles within range.

Alternatively, the method further comprises broadcasting at an increased or decreased coding rate to the mobiles within range.

Although a typical broadcast service, such as MBMS, does not guarantee delivery, in order to maximise the number of users which receive the service successfully, preferably, the method further comprises repeating the broadcast a number of times.

There are a number of methods by which the network controller can obtain the required data, for example the network controller may broadcast an offer of service using an MBMS channel and the mobile stations may respond using an existing random access channel (RACH), but preferably the network controller broadcasts an offer of service using an MBMS channel and the mobile stations respond using a new MBMS RACH.

The RACH is always present in a cell, but has very little free capacity; PRACH is not always deployed, but it has sufficient capacity and is already part of the standard; an MBMS specific RACH (MRACH) has the advantage that it has no legacy coding because it is new, but it would only be useful if included in the standard.

Preferably, both position and received signal quality data are received from each interested mobile station.

This may be, for example, data relating to distance from the BTS antenna, pathloss measurements or power used to respond to the network controller.

The mobile stations may use real-time measures of the position and power level data to decide whether they should request a point to point channel or a broadcast, but this could have the effect of changing the number from those calculated when making the determination and possibly increase the cost, so preferably, the network controller broadcasts the determined received power level or received quality for a broadcast and each interested mobile station tests against stored received power level or stored received quality to calculate whether it requires a point to point channel.

Preferably, data enabling the position or received signal quality to be determined for any mobile station which is not idle is transferred, from a network controller via which that mobile station is connected, to the network controller broadcasting the offer of service.

Typically, the service is universal mobile telecommunications service UMTS service and the data is transferred from a serving radio network controller RNC to a drift RNC via an interface link.

The interface could be Iur, Iur-g, Iu or interfaces to other access technologies.

Preferably, the data is added to a linking message.

Alternatively, the data is transferred on demand.

Preferably, a change between a broadcast transmission and an alternative mechanism is made in accordance with a hysterisis diagram.

This avoids a "ping-pong" effect whereby switching from one transmission mode to another occurs too frequently.

A method of operating a mobile wireless service in accordance with the present invention will now be described with reference to the accompanying drawings in which:
Figure 1shows an example cell layout having three zones around a transceiver for which the method of the present invention can be applied;
Figure 2 illustrates an MRACH logical channel for the mobile station to use in its response in the method of the present invention; and,
Figure 3 outlines an example of the method of the present invention.
Figure 4 is a hysterisis diagram for change of mode between "point to point" and "point to multipoint".

The method of the present invention addresses the need to use resources efficiently in communication of the same data, a broadcast, with a number of mobile stations within a cell, without causing undue interference with neighbouring cells or reduction of quality because of interference from neighbouring cells. Current practice is simply to broadcast at full power if the number of interested MS's in a cell are deemed sufficient to use broadcast mode at all.

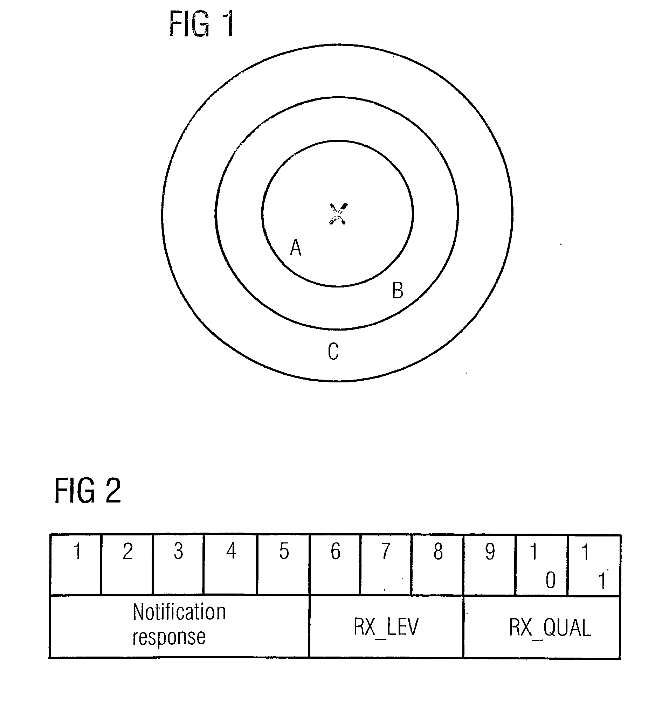

Figure 1 shows an example situation in which users are randomly distributed around the BTS (marked by X). The area within the cell which is within range of X is subdivided into three zones, A, B and C. The Base Station Subsystem (BSS) has a particular MBMS service available, but needs to determine the most efficient way of providing that to each MS. Thus, the network controller broadcasts a request that all of the MS within the cell must send back certain data to register their interest. If the majority of interested users are in zone A then less power or a less robust coding scheme would be needed for a ptm bearer (i.e. a broadcast) than if the majority of the users were in either area B or C which are further from the BTS. A base station controller (BSC) may choose to provide a ptm bearer in zone A only, so then an indication needs to be sent to all MS in regions B and C that they should request a ptp bearer for the MBMS session. This is most common in circumstances where users are clustered around a BTS, for example at a concert, whereas in general urban use, users tend to be more spread out and moving, so it will not always be a clear-cut decision.

The present invention provides a mechanism for the MS in the cell interested in MBMS to respond to the MBMS notification in a quick and efficient manner and for the BTS to determine suitable mechanisms for communication with interested MS's. Particular ways in which the MS can respond include using any of the logical channels for example, random access channel (RACH), packet random access channel (PRACH) or a proposed MRACH to respond to the MBMS notification. When the MBMS notification is sent in a cell, additional signalling instructs the MS to provide information to assist the BTS in determining the distance of the MS from the BTS within the sector/cell and so to determine the communication mechanism to be used.

The BSS sends a count indication message including a list of values which will be used in its calculation to determine the communication mechanism and sends an associated bit pattern. The bit pattern sent in the notification message from the BSS may correspond to one or both of received quality and received power levels in the MS, and allows the MS to indicate the radio quality it is receiving in the cell. The BSC can set these to be any value which is useful in calculating the location of MS, but in the example below RX_LEV and RX_QUAL are used, two well known GPRS power parameters.

Upon receiving this notification/count indication, the MS responds to the BSS, indicating that it wants to receive a given service. Fig. 2 shows an example indication where an 11 bit MRACH access burst is used. 3 bits are used for each of the RX_LEV and RX_QUAL and the remainder for the notification response. This indication of service may be explicit and provide a unique identification of the required service or implicit by having only one outstanding notification/counting request at one time. The MS should also respond indicating the values of the received power levels using the bit pattern provided in the counting to allow the BSC to use an algorithm to determine whether ptm or ptp should be used, and at what power level a ptm bearer should be sent (i.e. to reach all MS in area A above with a ptm bearer, and then provide a ptp bearer to all other MS in areas B and C). The advantage of this is that unlike a blanket broadcast, the chances of interfering with transmissions in an adjacent cell are reduced. Only in those cases where the number of MS present in the cell is sufficient for a broadcast and those MS are well spread over the full area of the cell will full power be needed. There may still be occasions when this happens and coincides with a similar situation in a neighbouring cell, so giving rise to a reduction in quality, but less often.

The BSC will receive a number of responses from many mobiles, and each will contain an indication of the service required and the received power/quality levels. This information is then used in the BSC to calculate the preferred ptm channel usage.

An alternative situation is one in which the BSC decides to broadcast at standard power with an increased coding rate. This will have the effect that an MS at the limit of the cell will get a poor quality level, but that the MS nearer to the BTS will receive their broadcast more quickly and hence the length of time for which the broadcast is transmitted will be reduced. In some cases it can still be more efficient to use a faster broadcast and repeat it several times to improve the chances of a particular MS at the edge of the zone getting worthwhile reception, than to use ptp bearers. The BSC may need to take into account the effect of broadcasting at full power on neighbouring cells.

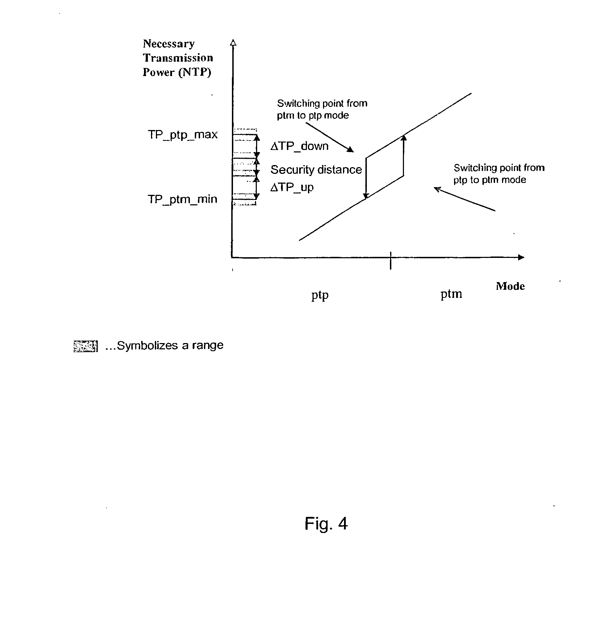

Since mobiles move about over a period of time, some will leave the cell and others join it and also the distribution within the cell will change, so the process of determining the most appropriate mode of transmission may need to be repeated, either at regular intervals or in response to specific events. This repetition can result in the transmission mode for a particular mobile changing unduly frequently, so in a preferred embodiment, hysterisis is applied to prevent this happening. An example of a hysterisis diagram for switching between ptp and ptm is shown in Fig. 4. On the y axis the necessary transmission power (NTP) can be replaced by another parameter, proportional to this, such as user distance from the transmitter.

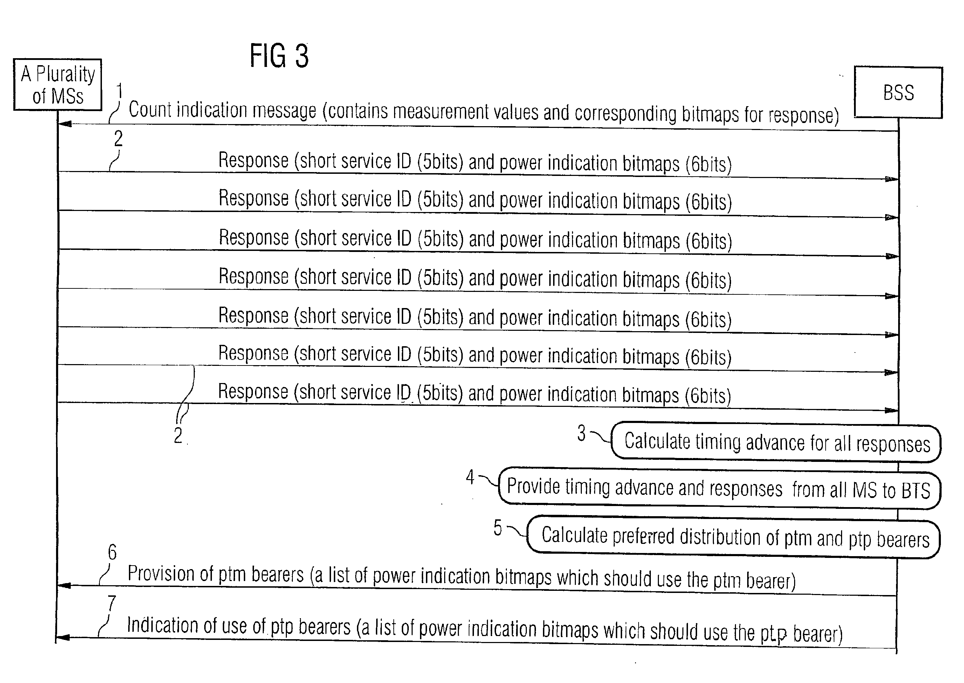

An example sequence of events by which the BSS can determine how to transmit an MBMS service is illustrated in Fig. 3. The BSS sends a count indication message (step 1) to a plurality of mobile stations. This message contains measurement values and corresponding bitmaps for response. Each MS sends a response (step 2) containing a short service ID in the format shown in Fig. 2 of 5 bits and power indication bitmaps of 6 bits. The BSS calculates timing advance for all responses (step 3), provides timing advances and responses from all MS's to the BTS (step 4) and calculates a preferred distribution of ptm and ptp bearers (step 5). The BSS then sends a message (step 6) re provision of ptm bearers (a list of power indication bitmaps which should use the ptm bearer) and also sends a message (step 7) re indication of use of ptp bearers (a list of power indication bitmaps which should use the ptp bearer).

More generally, the stages can be split up, the first being "count indication sent" in which the message is sent from the BSS in the cell in order to determine the need or not for a ptm or number of ptp MBMS bearers. This may contain the following: an indication that a response is required; a service identity; and, a list of received powers/received quality in the MS and associated bitmaps for the response on the chosen channel - for this example, MRACH using RX_LEV and RX_QUAL, although other measures could be used. The RX_LEV (received power level) tells the BTS the received power at the MS, whereas the RX_QUAL provides an approximation of the carrier to interface ratio (C/I) received at the MS.

Next, the MS responds on a random access channel indicating the various parameters requested in the notification message. The more sophisticated the request for information, the more likely it is that the MRACH will have to be used for the response message. The RX_LEV and RX_QUAL are both 3 bits in length, and hence the resulting combination of response could require up to 64 different responses. This can be managed in 6 bits, leaving 5 bits for the response indication on the MRACH if an 11 bit access burst is used. Fig. 2 shows a possible implementation of the 11 bit access burst where the first 5 bits are fixed and used to indicate notification response.

The BSS then calculates ptm or ptp. Any and all of the received values may be fed into an implementation specific algorithm in order to allow the operator to take into account the full operating environment before choosing to provide a ptm bearer or number of ptp bearers or combination for the delivery of MBMS.

Finally, an assignment stage where the BSS uses the codes received in the responses (indicating the RX_LEV and RX_QUAL) to indicate to each group of MS that they should use a ptp or ptm bearer. For example, all MS with an RX_LEV higher than a given value should use the ptm channel, and those with the RX_LEV below a certain value should use a ptp channel. Each MS will have measured the requested data and sent this back in its response message. When the indication of the cut-off levels is sent out, either the MS will have stored the data in its response message and use this to determine which side of the boundary it falls, or else it will measure the data again at the instant of receiving the notification and use that as its basis for which group it falls into. This latter would result in some changes to the numbers in each category, so may be viewed as less desirable if it increases the overall cost of resources. The user may have the option not to connect, if it does not fall within the range of the ptm broadcast, despite having expressed an interest in the service.

Generally, a mobile will be registered for a number of services in the network and so will send back a positive response for services for which it is registered, which is processed as described above. However, there is also the possibility that some of the mobiles registered for the service on offer are not idle, they are radio resource control (RRC) connected, for example, engaged on a call. This is a particular problem when a mobile is moving between controllers because the detailed data on position and pathloss etc, required to enable a judgement on the most appropriate way to provide the offered service, is not available to the controller offering the service. As a result this detailed data is not included in the assessment, reducing system efficiency.

The solution to this problem is to provide the required additional information as to which services the mobile has subscribed to, from the controller of the mobile to the controller offering the service. In the case of UMTS, a serving radio network controller (RNC) communicates with a drift RNC via an interface link, such as an Iur link and the required data can either be explicitly added to this link message or else an information exchange procedure can be extended in such a way that the drift RNC can retrieve the information at any time.

This means that the decision on whether to use ptp or ptm will still be based on detailed information about the situation of each individual mobile, so reducing use of transmission power and consequential interference with neighbouring cells, so that the air interface resources in terms of power are minimised. The serving RNC may have all the necessary data to hand, e.g. obtained during preparation of handover, so in that case it is not even necessary to make any further measurements.

If the mobile is not able to receive a service in parallel with an ongoing service, then it would be expected to temporarily deregister for all other services via the network controller.

It should be noted that the specific values provided herein are an example of possible parameters that may be used in the determination of the need for a single ptm or a number of ptp bearers, or a combination of both.

## Claims

1. A method of operating a multimedia broadcast / multicast service, the method comprising causing a network controller (X) to broadcast to all mobile stations in a cell (A, B, C) an offer of service; requesting (1) from each mobile station an indication of interest in the offered service; receiving data (2) relating to each interested mobile station enabling the position or received signal quality of each mobile station within the cell to be determined; calculating a preferred distribution of point to multipoint and point to point bearers for interested mobile stations in one or more predefined areas within the cell; **characterised in that** the range of a subsequent broadcast is determined by one of received power level or received quality at the mobile station of a notification message sent from the base transceiver station to the mobile station; wherein the broadcast uses point to multipoint bearers; and requiring each interested mobile station which is out of range (B, C) of the subsequent broadcast transmission (6) to use point to point bearers (7) to receive the service.

2. A method according to claim 1, further comprising broadcasting at reduced power to the mobiles within range (A).

3. A method according to claim 1, further comprising broadcasting at an increased or decreased coding rate to the mobiles within range (A).

4. A method according to claim 3, further comprising repeating the broadcast a number of times.

5. A method according to any preceding claim, wherein the network controller (X) broadcasts an offer of service using an MBMS channel and the mobile stations respond using an existing random access channel RACH.

6. A method according to any of claims 1 to 4, wherein the network controller (X) broadcasts an offer of service using an MBMS channel and the mobile stations respond using a new MBMS RACH.

7. A method according to any preceding claim, wherein both position and received signal quality data are received from each interested mobile station.

8. A method according to any preceding claim, wherein the network controller (X) broadcasts the determined received power level or received quality for a broadcast and each interested mobile station tests these against stored received power level or stored received quality to calculate whether it requires a point to point channel.

9. A method according to any preceding claim, wherein data enabling the position or received signal quality to be determined for any mobile station which is not idle is transferred, from a network controller (X) via which that mobile station is connected, to the network controller broadcasting the offer of service.

10. A method according to claim 9, wherein the service is universal mobile telecommunications service UMTS and the data is transferred from a serving radio network controller RNC to a drift RNC via an interface link.

11. A method according to claim 10, wherein the data is added to a linking message.

12. A method according to claim 10, wherein the data is transferred on demand.

13. A method according to any preceding claim, wherein a change between a broadcast transmission and a point to point bearer is made in accordance with a hysterisis diagram.

## Patentansprüche

1. Verfahren zum Betreiben eines Multimedia Broadcast/Multicast Service (MBMS), wobei das Verfahren beinhaltet, einen Netzwerk-Controller (X) zu veranlassen, an alle Mobilstationen MS in einer Funkzelle (A, B, C) ein Serviceangebot zu senden; von jeder Mobilstation eine Angabe zum Interesse an dem angebotenen Service anzufordern (1); Daten zu jeder interessierten Mobilstation zu empfangen (2), die eine Ermittlung des Standorts oder der Empfangssignalqualität für jede Mobilstation in der Funkzelle erlauben; eine bevorzugte Verteilung von Punkt-zu-Mehrpunkt (PTM)- und Punkt-zu-Punkt (PTP) -Trägern für die interessierten Mobilstationen in einem oder mehreren vorab definierten Bereich(en) innerhalb der Funkzelle zu berechnen; **dadurch gekennzeichnet, dass** die Reichweite der nachfolgenden Broadcast-Übertragung anhand von entweder dem Empfangssignalpegel oder der Empfangssignalqualität einer von der Basisstation an die Mobilstation gesendeten Benachrichtigungsnachricht an der Mobilstation ermittelt wird; wobei für die Broadcast-Übertragung Punkt-zu-Mehrpunkt (PTM) -Träger verwendet werden; und dass jede interessierte Mobilstation, die sich außerhalb der Reichweite (B, C) der nachfolgenden Broadcast-Übertragung (6) befindet, angewiesen wird, Punkt-zu-Punkt (PTP) - Träger (7) zu verwenden, um den Service zu empfangen.

2. Verfahren gemäß Anspruch 1, welches ferner beinhaltet, dass die Broadcast-Übertragung an die Mobilstationen innerhalb der Reichweite (A) mit verringerter Sendeleistung erfolgt.

3. Verfahren gemäß Anspruch 1, welches ferner beinhaltet, dass die Broadcast-Übertragung an die Mobilstationen innerhalb der Reichweite (A) mit einer höheren oder niedrigeren Codierrate erfolgt.

4. Verfahren gemäß Anspruch 3, welches ferner beinhaltet, die Broadcast-Übertragung eine Anzahl von Malen zu wiederholen.

5. Verfahren gemäß einem der vorstehenden Ansprüche, wobei der Netzwerk-Controller (X) zum Ausstrahlen eines Serviceangebots einen MBMS-Kanal verwendet und die Mobilstationen für die Antwort einen vorhandenen Direktzugriffskanal RACH verwenden.

6. Verfahren gemäß einem der Ansprüche 1 bis 4, wobei der Netzwerk-Controller (X) zum Ausstrahlen eines Serviceangebots einen MBMS-Kanal verwendet und die Mobilstationen für die Antwort einen neuen MBMS-RACH verwenden.

7. Verfahren gemäß einem der vorstehenden Ansprüche, wobei von jeder interessierten Mobilstation Daten sowohl zum Standort als auch zur Empfangssignalqualität empfangen werden.

8. Verfahren gemäß einem der vorstehenden Ansprüche, wobei der Netzwerk-Controller (X) den ermittelten Empfangssignalpegel oder die ermittelte Empfangssignalqualität für eine Broadcast-ÜBertragung ausstrahlt und jede interessierte Mobilstation diese mit einem gespeicherten Empfangssignalpegel bzw. einer gespeicherten Empfangssignalqualität vergleicht, um zu berechnen, ob sie einen Punkt-zu-Punkt-Kanal benötigt.

9. Verfahren gemäß einem der vorstehenden Ansprüche, wobei Daten, die die Bestimmung des Standortes oder der Empfangssignalqualität für eine beliebige Mobilstation, die nicht frei ist, von einem Netzwerk-Controller (X), über den die Mobilstation verbunden ist, an den Netzwerk-Controller übertragen werden, der das Serviceangebot ausstrahlt.

10. Verfahren gemäß Anspruch 9, wobei es sich bei dem Service um einen UMTS-Service (UMTS = Universal Mobile Telecommunications Service, *universelles System für Mobilkommunikation*) handelt und die Daten von einem versorgenden RNC (Radio Network Controller, *Funknetzsteuerung)* über eine Schnittstellenverbindung an einen Drift-RNC übertragen werden.

11. Verfahren gemäß Anspruch 10, wobei die Daten in eine Verbindungsnachricht eingefügt werden.

12. Verfahren gemäß Anspruch 10, wobei die Daten nach Bedarf übertragen werden.

13. Verfahren gemäß einem der vorstehenden Ansprüche, wobei der Wechsel von einer Broadcast-Übertragung auf einen Punkt-zu-Punkt-Träger gemäß einem Hysteresediagramm erfolgt.

## Revendications

1. Procédé d'utilisation d'un service multimédia à multidiffusion générale/sélective, le procédé consistant à amener un contrôleur de réseau (X) à diffuser à toutes les stations mobiles d'une cellule (A, B, C) une offre de service ; à demander (1) à chaque station mobile une indication de son intérêt pour le service offert ; à recevoir des données (2) relatives à chaque station mobile intéressée permettant de déterminer la position ou la qualité du signal reçu de chaque station mobile de la cellule ; à calculer une distribution préférée de voies supports point à multipoint et point à point pour les stations mobiles intéressées d'une ou de plusieurs zones prédéfinies dans la cellule ; **caractérisé en ce que** la portée d'une diffusion ultérieure est déterminée soit par le niveau de puissance reçue, soit par la qualité reçue au niveau de la station mobile d'un message de notification envoyé de la station émettrice-réceptrice de base à la station mobile, en sachant que la diffusion utilise des voies supports point à multipoint, et à demander à chaque station mobile intéressée qui est hors de portée (B, C) de l'émission multidestinataire ultérieure (6), d'utiliser des voies supports point à point (7) pour recevoir le service.

2. Procédé selon la revendication 1, consistant par ailleurs à diffuser à puissance réduite vers les mobiles à portée (A).

3. Procédé selon la revendication 1, consistant par ailleurs à diffuser à un débit de codage augmenté ou diminué vers les mobiles à portée (A).

4. Procédé selon la revendication 3, consistant par ailleurs à répéter la diffusion un certain nombre de fois.

5. Procédé selon l'une quelconque des revendications précédentes, dans lequel le contrôleur de réseau (X) diffuse une offre de service en utilisant une voie de MBMS et les stations mobiles répondent en utilisant une voie d'accès aléatoire RACH existante.

6. Procédé selon l'une quelconque des revendications 1 à 4, dans lequel le contrôleur réseau (X) diffuse une offre de service en utilisant une voie de MBMS et les stations mobiles répondent en utilisant une nouvelle RACH pour MBMS.

7. Procédé selon l'une quelconque des revendications précédentes, dans lequel des données à la fois sur la position et sur la qualité du signal reçu sont reçues de chaque station mobile intéressée.

8. Procédé selon l'une quelconque des revendications précédentes, dans lequel le contrôleur réseau (X) diffuse le niveau de puissance reçue ou la qualité reçue déterminés pour une diffusion et chaque station mobile intéressée teste ceux-ci par rapport à un niveau de puissance reçue mis en mémoire ou à une qualité reçue mise en mémoire pour calculer si elle requiert une voie point à point.

9. Procédé selon l'une quelconque des revendications précédentes, dans lequel les données permettant de déterminer la position ou la qualité du signal reçu pour une quelconque station mobile qui n'est pas libre, sont transférées d'un contrôleur de réseau (X), par le biais duquel cette station mobile-là est connectée, au contrôleur réseau diffusant l'offre de service.

10. Procédé selon la revendication 9, dans lequel le service est le service universel de télécommunications mobiles UMTS et les données sont transférées d'un contrôleur de réseau radio RNC de desserte à un RNC en mouvement par le biais d'une liaison d'interface.

11. Procédé selon la revendication 10, dans lequel les données sont ajoutées à un message de liaison.

12. Procédé selon la revendication 10, dans lequel les données sont transférées à la demande.

13. Procédé selon l'une quelconque des revendications précédentes, dans lequel un changement entre une transmission en multidiffusion et une voie support point à point se fait selon un diagramme d'hystérésis.
